(19) **Europäisches Patentamt**
**European Patent Office**
**Office européen des brevets**

(11) **EP 1 417 243 B1**

(12) **EUROPEAN PATENT SPECIFICATION**

(45) Date of publication and mention
of the grant of the patent:
**10.09.2008 Bulletin 2008/37**

(51) Int Cl.:
***C08F 279/02*** *(2006.01)* ***C08F 2/22*** *(2006.01)*

(21) Application number: **02755925.1**

(86) International application number:
**PCT/KR2002/001374**

(22) Date of filing: **22.07.2002**

(87) International publication number:
**WO 2003/011927 (13.02.2003 Gazette 2003/07)**

(54) **ACRYLONITRILE-BUTADIENE-STYRENE (ABS) THERMOPLASTIC TRANSPARENT RESIN**

THERMOPLASTISCHES TRANSPARENTES ACRYLNITRIL-BUTADIEN-STYROL-HARZ (ABS-HARZ)

RESINE TRANSPARENTE THERMOPLASTIQUE ACRYLONITRILE-BUTADIENE-STYRENE (ABS)

(84) Designated Contracting States:
**DE FR IT**

(30) Priority: **30.07.2001 KR 2001046048**

(43) Date of publication of application:
**12.05.2004 Bulletin 2004/20**

(73) Proprietor: **LG Chem, Ltd.**
**Seoul 150-721 (KR)**

(72) Inventors:
• **YOO, Keun-Hoon**
**Jeollanam-do 555-050 (KR)**
• **CHOI, Jeong-Su**
**Yosu-city,**
**Jeollanam-do 555-050 (KR)**

• **KIM, Sung-Hee**
**Gwangju-city 503-232 (KR)**
• **BAHN, Hyong-Min**
**Yeosu-city,**
**Yeollanam-do 555-050 (KR)**
• **LEE, Chan-Hong**
**Daejeon-city 305-721 (KR)**

(74) Representative: **Jacobson, Claude et al**
**Cabinet Lavoix**
**2, place d'Estienne d'Orves**
**75441 Paris Cedex 09 (FR)**

(56) References cited:
**GB-A- 2 092 604**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## BACKGROUND OF THE INVENTION

### (a) Field of the Invention

The present invention relates to a process for preparing thermoplastic resin for extrusion sheets, and more particularly, to a process for preparing acrylonitrile-butadiene-styrene (ABS) thermoplastic transparent resin having superior impact resistance, chemical resistance, processability, whitening resistance, high temperature elongation, etc., and very superior transparency, by controlling a mixing ratio of methacrylate or acrylate alkylester compound, aromatic vinyl compound, and vinyl cyanide compound monomers grafted on conjugated diene rubber latex of which an average particle diameter and gel contents (degree of crosslinking) are optimized to control the refractive index of the monomer mixture to be similar to that of the rubber latex, and to optimize the molecular weight.

### (b) Description of the Related Art

Recently, as industries have advanced and products have become differentiated, studies for developing transparent materials in order to introduce the nude fashion culture and pastel tone color culture in products to achieve design revolution have actively progressed. For this, many technologies for introducing an acrylate alkylester or methacrylate alkylester compound into acrylonitrile-butadiene-styrene (ABS) resin having superior impact resistance, chemical resistance, processability, etc. to give transparency have been developed (U.S.P. No. 4,767,833, Japanese Patent Laid-open publication Hei 11-147920, EP 703252, Japanese Patent Laid-open Publication No. 8-199007). However, since most of these technologies are aimed at injection-molding products and thus high temperature elongation or whitening resistance, etc. are inferior, the products are not suitable for extrusion sheets such as expressway and street transparent soundproofed walls, transparent advertising panels, transparent bathtub, industrial transparent sheets (covers for machines, industrial transparent windows and doors, canopies, etc.), of which uses are actively being developed. Accordingly, polycarbonate resin or PMMA resin is limitedly used for these sheets. However, although the polycarbonate resin extrusion sheet has good transparency and impact resistance, it has inferior processability and chemical resistance, etc., and is expensive. And although the PMMA resin extrusion sheet has good transparency, it has limitations in applications due to a drop in impact resistance, etc.
In addition, ABS resin for extrusion sheets that can be generally used has good impact resistance, processability, chemical resistance, high temperature elongation, etc., but it is an opaque material and thus is not suitable for transparent extrusion sheet.

## SUMMARY OF THE INVENTION

Accordingly, the present invention is made in consideration of the problems of the prior arts, and it is an object of the present invention to provide a process for preparing acrylonitrile-butadiene-styrene (ABS) thermoplastic transparent resin having superior impact resistance, chemical resistance, processability, whitening resistance, high temperature elongation, etc., and very superior transparency, and is thus suitable for extrusion sheets.
In order to achieve the objects, the present invention provides a process for preparing acrylonitrile-butadiene-styrene thermoplastic transparent resin comprising the steps of:

    a) providing conjugated diene rubber latex having a swelling index of 8-60, and
    b) graft-copolymerizing

        i) on 5 to 35 wt% of the a) conjugated diene rubber latex,
        ii) 30 to 70 wt% of methacrylate alkylester or acrylate alkylester;
        iii) 15 to 30 wt% of an aromatic vinyl compound; and
        iv) 0.5 to 20 wt% of a vinyl cyanide compound

by emulsion-polymerization wherein the weight average moleculat weight of the grafted copolymer obtained by graft copolymerization is 80,000+0200,000.

## DETAILED DESCRIPTION AND THE PREFERRED EMBODIMENTS

The present invention will now be explained in detail.
In order to solve the problems of the prior art, the present inventors, as a result of studies, have prepared a thermoplastic transparent resin for extrusion sheets having very superior transparency and superior chemical resistance, processability, high temperature elongation, whitening resistance, etc., by introducing a methylmethacrylate alkyl ester compound; controlling contents of introduced monomers to control a difference between the refractive index of the rubber latex used and that of a mixture of methacrylate alkylester or acrylate alkylester compound, aromatic vinyl compound (styrene), acrylonitrile compound, etc. grafted thereon to within 0.005; maintaining a specific molecular weight in order to assure high temperature elongation; and controlling gel contents (degree of crosslinking) and average particle diameter of the rubber latex used in order to maintain whitening resistance, when preparing ABS resin comprising an acrylonitrile giving superior chemical resistance, a butadiene giving superior impact resistance, and a styrene giving superior processability.

In the present invention, the refractive index of the monomer mixture absolutely influences transparency, and the refractive index is controlled by controlling the mixing ratio of monomers. Specifically, when polybutadiene is used as the rubber latex, since the refractive index of the rubber latex is about 1.518, the refractive index of the grafted ingredients should be controlled to be similar thereto in order to assure transparency. Thus, the mixing ratio of monomers is very important. For reference, the refractive indexes of each monomer used in the present invention are as follows: that of methylmethacrylate is about 1.49; that of styrene is 1.59; and that of acrylonitrile is about 1.518.

Accordingly, it is important to control the mixing ratio of monomers so that the refractive index difference between the conjugated diene rubber latex and a mixture of the methylmethacrylate alkyl ester compound, the aromatic vinyl compound (styrene), and the vinyl cyanide compound (acrylonitrile compound) grafted thereon may be within 0.005. If the refractive index difference is 0.005 or more, the transparency will drop and the object of the present invention cannot be achieved.

As the polymerization method, bulk polymerization, solution polymerization, suspension polymerization, etc. can be used, but since these methods must use a rubber with a large particle diameter, and thus whitening resistance is inferior and a polymer with a large molecular weight is difficult to obtain, emulsion polymerization is preferable.

The acrylonitrile-butadiene-styrene thermoplastic transparent resin comprises a conjugated diene rubber latex and monomers grafted thereon, i.e., a methacrylate alkylester compound, an aromatic vinyl compound, and a vinyl cyanide compound, and it is prepared by emulsion polymerization.

As a method for graft-adding each ingredient, a batch introducing method and a continuously (sequentially) introducing method can be used. The present invention uses a complex type controlling batch introducing method and a continuous introducing method.

The molecular weight of the graft copolymer obtained in the present invention is 80,000 to 200,000. If the molecular weight is less than 80,000 high temperature elongation is inferior, and if it is more than 200,000, processability is inferior.

A process for preparing ABS thermoplastic transparent resin will be explained in more detail.

a) Process for preparing conjugated diene rubber latex

The conjugated diene rubber latex used in the present invention has an average particle diameter of 1900 to 5500 Å, preferably 2000 to 5000Å, gel contents of 50 to 98%, and a swelling index of 8 to 60. If the average particle diameter is less than 1900 Å, impact resistance will drop, and if it is more than 5500 Å, whitening resistance is not good. Also, if the gel contents are less than 49%, whitening resistance will drop, and if it is more than 99%, impact resistance is not good.

As the conjugated diene rubber latex, polybutadiene, butadiene-styrene copolymer (SBR), butadiene-acrylonitrile copolymer (NBR), ethylene-propylene copolymer (EPDM), and polymers similar thereto can be used, and polybutadiene or butadiene-styrene copolymer is preferable, and polybutadiene is more preferable.

One example of preparation of the polybutadiene rubber latex is as follows.

According to the present invention, 100 weight parts of 1,3-butadiene, 1 to 4 weight parts of an emulsifier, 0.2 to 1.5 weight parts of a polymerization initiator, 0.5 weight parts of an electrolyte, 0.1 to 0.5 weight parts of a molecular weight controlling agent, and 75 weight parts of ion-exchange water are batch-introduced and emulsion-polymerized to prepare polybutadiene rubber latex having an average particle diameter of 2000 to 5000 Å, gel contents of 50 to 98%, and a swelling index of 8 to 60.

The emulsion polymerization is preferably conducted at 65 to 85 °C for 25 to 50 hours.

The emulsifier is selected from the group consisting of alkyl aryl sulfonate, alkali methyl alkyl sulfate, sulfonated alkylester, fatty acid soap, an alkali salt of rosin acid, and a mixture thereof.

As the polymerization initiator, a water-soluble persulfate or peroxy compound can be used, and an oxidation-reduction type can also be used. A preferable water-soluble persulfate is sodium persulfate or potassium persulfate. Also, a liposoluble polymerization initiator selected from the group consisting of cumene hydroperoxide, diisopropyl benzenehydroperoxide, azobis isobutylnitrile, tert-butyl hydroperoxide, paramethane hydroperoxide, benzoylperoxide, and a mixture thereof can be used.

The electrolyte is selected from the group consisting of KCl, NaCl, KHCO$_3$, NaHCO$_3$, K$_2$CO$_3$, Na$_2$CO$_3$, KHSO$_3$, NaHSO$_3$, K$_4$P$_2$O$_7$, K$_3$PO$_4$, Na$_3$PO$_4$, K$_2$HPO$_4$, Na$_2$HPO$_4$, and a mixture thereof.

As the molecular weight controlling agent, mercaptan is preferable.

The emulsion polymerization temperature is very important for controlling the gel contents and swelling index of rubber latex, and the selection of an initiator should also be considered.

b) Process for preparing graft copolymer

According to the present invention, a monomer mixture of 30 to 70 wt% of a methacrylate alkyl ester compound or an acrylate alkylester compound, 15 to 30 wt% of an aromatic vinyl compound, and 0.5 to 20 wt% of a vinylcyanide compound is graft-copolymerized on 5 to 35 wt% of the conjugated diene rubber latex (preferably, polybutadiene rubber latex) by emulsion polymerization to prepare an acrylonitrile-butadiene-styrene graft copolymer. The graft copolymerization is conducted by adding 0.2 to 0.6 weight parts of an emulsifier, 0.2 to 0.6 weight parts of a molecular weight controlling agent, and 0.05 to 0.3 weight parts of a polymerization initiator, on the basis of 100 weight parts of the monomer mixture.

The graft copolymerization is preferably conducted at 65 to 80 °C for 4 to 7 hours.

The methacrylate alkylester or acrylate alkylester compound is preferably one or more kinds selected from the group consisting of methyl methacrylate, ethyl methacrylate, methyl acrylate, and a derivative thereof.

The aromatic vinyl compound is preferably one or more kinds selected from the group consisting of styrene, $\alpha$-methyl styrene, o-ethyl styrene, p-ethyl styrene, vinyl toluene, and derivatives thereof.

The vinyl cyanide compound is preferably one or more kinds selected from the group consisting of acrylonitrile, methacrylonitrile, ethacrylonitrile, and derivatives thereof.

The emulsifier is preferably selected from the group consisting of alkylaryl sulfonate, alkali methylalkyl sulfate, sulfonate alkylester, fatty acid soap, an alkali salt of rosin acid, and a mixture thereof.

As the molecular weight controlling agent, tert-dodecyl mercaptan is preferable.

As the polymerization initiator, peroxides such as cumene hydroperoxide, diisopropylbenzene hydroperoxide, and a persulfate can be used; and an oxidation-reduction catalyst selected from the group consisting of sodium formaldehyde sulfoxylate, sodium ethylenediamine tetraacetate, ferrous sulfate, dextrose, sodium pyrophosphate, sodium sulfite, and a mixture thereof can be used.

After polymerization is terminated, the polymerization conversion rate is preferably 98% or more, and an antioxidant and stabilizer may be added to the latex and coagulated with calcium chloride an aqueous solution at 80 °C or more, and then dehydrated and dried to obtain a powder. Stability of the prepared graft copolymer latex can be judged by measuring solid coagulation contents (%) using Equation 1:

[Equation 1]

$$\text{Solid coagulation contents (\%)} = \frac{\text{Weight of produced coagulated substance (g)}}{\text{Weight of total rubber and monomers (g)}} \times 100$$

In Equation 1, when the solid coagulation contents are 0.7% or more, the stability of the latex seriously drops, and a graft copolymer suitable for the present invention cannot be obtained due to a large amount of the coagulated substance.

An antioxidant and a stabilizer are introduced into the obtained powder and then a pellet is prepared at 200 to 230 °C using a 2-shaft extrusion kneader, and the pellet is injection-molded again to measure its physical properties.

As explained, the mixing ratio of monomers is very important to obtain the transparent resin, and the refractive index differs according to the mixing ratio. Specifically, since the refractive index of polybutadiene rubber latex is about 1.518, the total refractive index of compounds grafted thereon should be similar thereto, and if the difference is 0.005 or more, transparency drops and thus it is not suitable for the present invention. Therefore, according to the present invention, an ABS thermoplastic resin is produced having superior impact resistance, chemical resistance, processability, whitening resistance, and high temperature elongation, and very superior transparency, and is thus suitable for manufacturing extrusion sheets.

The present invention will be explained in more detail with reference to the following Examples. However, these are to illustrate the present invention, and the present invention is not limited to them.

[Example 1]

1) Process for preparing polybutadiene rubber latex

To a nitrogen-substituted polymerization reactor (autoclave), 80 weight parts of ion-exchange water, 100 weight parts of 1,3-butadiene, 1.2 weight parts of potassium rosinate as an emulsifier, 1.5 weight parts of potassium salt, 0.7 weight parts of sodium carbonate ($Na_2CO_3$) as an electrolyte, 0.8 weight parts of potassium bicarbonate ($KCHO_3$), and 0.3 weight parts of tert-dodecylmercaptan (TDDM) as a molecular weight controlling agent were batch-introduced, and the reaction temperature was elevated to 65 °C. Then, 0.3 weight parts of potassium persulfate as an initiator were batch-introduced to initiate reaction, the reaction temperature was elevated to 85 °C for 35 hours, and then reaction was terminated and the obtained rubber latex was analyzed, as follows.

Gel contents (degree of crosslinking) and swelling index

The rubber latex was coagulated using diluted acid or metal salt, and washed and dried in a vacuum oven of 60 °C for 24 hours. Then, the obtained rubber mass was cut into tiny pieces, and 1 g of rubber fragments was put into 100 g of toluene and stored in a darkroom at room temperature for 48 hours. The resultant was then separated into sol and gel, and the gel contents and swelling index were determined as follows:

$$\text{Gel contents (\%)} = \frac{\text{Weight of insoluble contents (gel)}}{\text{Weight of sample}} \times 100$$

$$\text{Swelling index} = \frac{\text{Weight of swollen gel}}{\text{Weight of gel}}$$

Particle diameter

The particle diameter of the rubber latex was measured by a laser light scattering method using a Nicomp 370 HPL (U.S. Nicomp Company product).

The gel contents of the obtained rubber latex was 85%, the swelling index was 15, and the average particle diameter was about 2800 Å.

2) Process for preparing graft copolymer

A thermoplastic resin was prepared with the composition and contents as shown in Table 1.

In the first step, 18 weight parts of the prepared polybutadiene rubber latex, 90 weight parts of ion-exchange water, 0.2 weight parts of a sodium oleate emulsifier, 18.24 weight parts of methylmethacrylate, 7.09 weight parts of styrene, 2 weight parts of acrylonitrile, 0.1 weight parts of tert-dodecylmercaptan, 0.048 weight parts of sodiumpyrophosphate, 0.012 weight parts of dextrose, 0.001 weight parts of ferrous sulfate, and 0.04 weight parts of cumene hydroperoxide were batch-introduced at 40 °C into a nitrogen-substituted polymerization reactor, and reacted while elevating the reaction temperature to 73 °C over 2 hours.

Then, in the second step, a mixed emulsion solution of 70 weight parts of ion-exchange water, 0.4 weight parts of sodium oleate, 36.48 weight parts of methylmethacrylate, 14.19 weight parts of styrene, 4 weight parts of acrylonitrile, 0.15 weight parts of tert-dodecylmercaptan, 0.048 weight parts of sodium pyrophosphate, 0.012 weight parts of dextrose, 0.001 weight parts of ferrous sulfate, and 0.10 weight parts of cumene hydroperoxide were continuously introduced therein for 4 hours, and then the temperature was elevated to 76 °C, the reactant was aged for 1 hour, and the reaction was terminated. The polymerization conversion rate was 99.5%, and the solid coagulation contents were 0.1 %. The latex was coagulated with a calcium chloride aqueous solution and washed to obtain a powder, and the weight average molecular weight and physical properties were measured as follows.

a) Measurement of weight average molecular weight

The obtained powder was agitated in an acetone solution for 24 hours, and the acetone-insoluble rubber ingredient and acetone-soluble copolymer were separated using a centrifuge to measure the weight average molecular weight of the acetone-soluble copolymer with a GPC using PS as a standard. The molecular weight of the obtained copolymer was 150,000.

b) Measurement of physical properties

An antioxidant and stabilizer were introduced into the obtained powder, and then a pellet was prepared at 200 to 230 °C using a 2-shaft extrusion kneader, and the pellet was injection-molded again to measure physical properties thereof by the ASTM method. The results are shown in Table 1.

a) Measurement of whitening resistance

A sample for measuring tensile strength obtained by injection molding was bent by hand, and the degree of low blush property was evaluated with the naked eye. Whitening resistance was good so it was found to be usable, as shown in Table 1.

d) High temperature elongation experiment

A pellet was extruded with a sheet extruder to make its thickness 1.8 mm, and then elongation was measured at 150 °C with an elongation tester with the cross-head-speed of the sample set at 200 mm/min. The results are shown in Table 1.

e) Surface appearance

The extrusion pellet was extruded with a sheet extruder to make its thickness 1.8 mm, and then whether or not its surface was regularly maintained was confirmed by evaluation as follows. The results are shown in Table 1.

G: Surface thickness is regular and no flowmarks on surface
N.G.: Surface thickness is irregular and flowmarks exists on surface

[Comparative Example 1]

A thermoplastic resin was prepared by the same process as in Example 1, except that the reaction time was 22 hours instead of 35 hours in the process for preparing the rubber latex. The average particle diameter of the rubber latex was about 1800 Å, gel contents were about 93%, and the results of physical property tests are shown in Table 1.

[Comparative Example 2]

A thermoplastic resin was prepared by the same process as in Example 1, except that in the process for preparing the rubber latex, the reaction time was 70 hours instead of 35 hours, and reaction temperature was changed to 68 °C instead of elevating to 85 °C. The average particle diameter of the rubber latex was about 5500 Å, gel contents were about 60 %, and the results of physical property tests are shown in Table 1.

[Comparative Example 3]

A thermoplastic resin was prepared by the same process as in Example 1, except that in the process for preparing the rubber latex, the reaction time was 60 hours instead of 35 hours, and the reaction temperature was maintained at 65 °C instead of elevating to 85 °C, and the contents of the TDDM molecular controlling agent was 0.5 weight parts instead of 0.3 weight parts. The average particle diameter of the rubber latex was about 4200 Å, gel contents were about 45%, and the results of physical property tests are shown in Table 1.

[Comparative Example 4]

A thermoplastic resin was prepared by the same process as in Example 1, except that in the process for preparing the graft copolymer, the contents of methyl methacrylate used in the second step were 33.7 weight parts instead of 36.48 weight parts, and the contents of styrene were 17 weight parts instead of 14.19 weight parts. The results for physical property tests are shown in Table 1.

[Comparative Example 5]

A thermoplastic resin was prepared by the same process as in Example 1, except that in the process for preparing the graft copolymer, the contents of methylmethacrylate used in the second step were 41 weight parts instead of 36.48 weight parts, and the contents of styrene were 9.6 weight parts instead of 14.19 weight parts. The results for physical property tests are shown in Table 1.

[Comparative Example 6]

A thermoplastic resin was prepared by the same process as in Example 1, except that in the process for preparing the graft copolymer, the contents of tert-dodecylmercaptan used in the second step were 0.01 weight parts instead of 0.15 weight parts. The results for physical property tests are shown in Table 1. The molecular weight of the prepared graft copolymer was about 300,000.

[Comparative Example 7]

A thermoplastic resin was prepared by the same process as in Example 1, except that in the process for preparing the graft copolymer, the contents of tert-dodecylmercaptan used in the second step were 0.45 weight parts instead of 0.15 weight parts. The results for physical property tests are shown in Table 1. The molecular weight of the prepared graft copolymer was approximately 50,000.

[Experiment]

To 100 weight parts of the graft copolymers prepared in Example 1 and Comparative Examples 1 to 7, 0.1 weight parts of a lubricant and 0.2 weight parts of an antioxidant were introduced, and a pellet was prepared at a cylinder temperature of 210 °C using a 2-shaft extrusion kneader. The pellet was injection molded to prepare a sample, and the physical properties were measured. The results are shown in Table 1.

[Table 1]

| | | Haze | High temperature elongation (150°C) | Surface appearance | Whitening resistance | Impact resistance |
|---|---|---|---|---|---|---|
| Example 1 | | 2.1 | 1900 | G | Usable | 16 |
| Comparative Example | 1 | 1.9 | 1700 | G | Usable | 5 |
| | 2 | 5.4 | 2000 | G | Unusable | 19 |
| | 3 | 4.0 | 2100 | G | Unusable | 18 |
| | 4 | 16.7 | 1950 | G | Usable | 15.5 |
| | 5 | 18.9 | 1850 | G | Usable | 16.5 |
| | 6 | 2.8 | 2300 | G | Usable | 16.5 |
| | 7 | 2.0 | 500 | N.G | Usable | 12.5 |

As shown in Table 1, Example 1 showed very superior high temperature elongation, surface appearance, whitening resistance, and impact resistance by using a conjugated diene rubber latex of which the particle diameter and gel contents, etc. were controlled, and by controlling the ratio of the monomer mixture grafted thereon. On the contrary, Comparative Examples 1 to 7 showed generally inferior physical properties, and specifically, Comparative Example 1 showed a drop in impact resistance, Comparative Examples 2 and 3 showed a drop in whitening resistance, Comparative Examples 4 and 5 showed a drop in transparency, Comparative Example 6 showed inferior processability, and Comparative Example 7 showed inferior high temperature elongation.

As explained, the ABS thermoplastic resin prepared according to the present invention has superior impact resistance, chemical resistance, processability, whitening resistance, and high temperature elongation, and very superior transparency, and thus it is suitable for manufacturing extrusion sheets.

**Claims**

1. A process for preparing acrylonitrile-butadiene-styrene thermoplastic transparent resin for extrusion sheets, comprising the steps of:

    a) providing conjugated diene rubber latex having a swelling index of 8 to 60; and
    b) graft-copolymerizing

        i) on 5 to 35 wt% of the a) conjugated diene rubber latex,
        ii) 30 to 70 wt% of methacrylate alkylester or acrylate alkyl ester;
        iii) 15 to 30 wt% of an aromatic vinyl compound; and
        iv) 0.5 to 20 wt% of a vinyl cyanide compound

    by emulsion-polymerization wherein the weight arerage molecular weight of the grafted copolymer obtained by graft ispolymarigation is 80,000 to 200,000.

2. The process for preparing acrylonltrlle-butadiene-styrene thermoplastic transparent resin for extrusion sheets according to Claim 1, wherein a difference between the refractive index of the b) i) conjugated diene rubber latex and that of a mixture of the b) ii) methacrylate alkylester or acrylate alkylester compound, the b) iii) aromatic vinyl compound, and the b) iv) vinylcyanide compound is within 0.005.

3. The process for preparing acrylonitrile-butadiene-styrene thermoplastic transparent resin for extrusion sheets according to Claim 1, wherein the conjugated diene rubber latex has a average particle diameter of 2000 Å to 5000 Å and gel contents of 50 to 98%.

4. The process for preparing acrylonitrile-butadiene-styrene thermoplastic transparent resin for extrusion sheets according to Claim 1, wherein the conjugated diene rubber latex is selected from the group consisting of polybutadiene, butadiene-styrene copolymer (SBR), butadiene-acrylonitrile copolymer (NBR), ethylene-propylene copolymer (EPDM), and a rubber latex similar thereto.

5. The process for preparing acrylonitrile-butadiene-styrene thermoplastic transparent resin for extrusion sheets according to Claim 1, wherein the methacrylate alkyl ester or acrylate alkyl ester compound is one or more kinds selected from the group consisting of methyl methacrylate, ethyl methacrylate, methylacrylate, and a derivative thereof.

6. The process for preparing acrylonitrile-butadiene-styrene thermoplastic transparent resin for extrusion sheet according to Claim 1, wherein the aromatic vinyl compound is one or more kinds selected from the group consisting of styrene, $\alpha$-methyl styrene, o-ethyl styrene, p-ethyl styrene, vinyl toluene, and a derivative thereof.

7. The process for preparing acrylonitrile-butadiene-styrene thermoplastic transparent resin for extrusion sheet according to Claim 1, wherein the vinyl cyanide compound is one or more kinds selected from the group consisting of acrylonitrile, methacrylonitrile, ethacrylonitrile, and a derivative thereof.

8. The process for preparing acrylonitrile-butadiene-styrene thermoplastic transparent resin for extrusion sheets according to Claim 1, wherein the graft polymerization is conducted by further adding 0.2 to 0.6 weight parts of an emulsifier, 0.2 to 0.6 weight parts of a molecular weight controlling agent, and 0.05 to 0.3 weight parts of a polymerization initiator, on the basis of 100 weight parts of the monomer mixture.

9. The process for preparing acrylonitrile-butadiene-styrene thermoplastic transparent resin for extrusion sheets according to Claim 1, wherein the b) graft copolymerization is conducted at 65 to 80 °C for 4 to 7 hours.

**Patentansprüche**

1. Verfahren zur Herstellung eines thermoplastischen transparenten Acrylnitril-Eutadien-Styrol-Harzes für Extrusionsflächenkörper, umfassend die Schritte:

   a) Bereitstellen eines Kautschuklatex aus konjugiertem Dien mit einer Schwellzahl von 8 bis 60,
   b) Propfcopolymerisieren

      i) auf 5 bis 35 Gew.-% des Kautschuklatex aus konjugiertem Dien von a)
      ii) 30 bis 70 Gew.-% Methacrylatalkylester oder Acrylatalkylester.
      iii) 15 bis 30 Gew.-% einer aromatischen Vinylverbindung und
      iv) 0,5 bis 20 Gew.-% einer Vinylcyanidverbindung

   durch Emulsionspolymerisation, wobei das Gewichtsmittel des Molekulargewichts des durch Pfropfcopolymerisation erhaltenen gepfropften Copolymers 80.000 bis 200.000 beträgt.

2. Verfahren zur Herstellung eines thermoplastischen transparenten Acrylnitril-Butadien-Styrol-Harzes für Extrusionsflächenkörper nach Anspruch 1, wobei der Unterschied zwischen dem Brechungsindex des Kautschuklatex aus konjugiertem Dien von b) i) und dem eines Gemischs der Methacrylatalkylester- oder Acrylatalkylesterverbindung von b) ii), der vinylaromatischen Verbindung von b) iii) und der Vinylcyanidverbindung von b) iv) innerhalb von 0,005 liegt.

3. Verfahren zur Herstellung eines thermoplastischen transparenten Acrylnitril-Butadien-Styrol-Harzes für Extrusionsflächenkörper nach Anspruch 1, wobei der Kautschuklatex aus konjugiertem Dien einen mittleren Partikeldurchmesser von 2.000 bis 5.000 Å und einen Gelgehalt von 50 bis 98 % aufweist.

4. Verfahren zur Herstellung eines thermoplastischen transparenten Acrylnitril-Butadien-Styrol-Harzes für Extrusionsflächenkörper nach Anspruch 1, wobei der Kautschuklatex aus konjugiertem Dien aus der Gruppe von Polybutadien, einem Butadien-StyrolCopolymer (SBR), einem Butadien-Acrylonitril-Copolymer (NBR), einem Ethylen-Propylen-Copolymer (EPDM) und einem diesen ähnlichen Kautschuklatex ausgewählt ist.

5. Verfahren zur Herstellung eines thermoplastischen transparenten Acrylnitril-Butadien-Styrol-Harzes für Extrusionsflächenkörper nach Anspruch 1, wobei die Methacrylatalkylester- oder Acrylatalkylesterverbindung eine oder mehrere Arten aus der Gruppe von Methylmethacrylat, Ethylmethacrylat, Methylacrylat und einem Derivat davon ist.

6. Verfahren zur Herstellung eines thermoplastischen transparenten Acrylnitril-Butadien-Styrol-Harzes für Extrusionsflächenkörper nach Anspruch 1, wobei die aromatische Vinylverbindung eine oder mehrere Arten aus der Gruppe von Styrol, $\alpha$-Methylstyrol, o-Etyhlstyrol, p-Ethylstyrol, Vinyltoluol und einem Derivat davon ist.

7. Verfahren zur Herstellung eines thermoplastischen transparenten Acrylnitril-Butadien-Styrol-Harzes für Extrusionsflächenkörper nach Anspruch 1, wobei dic Vinylcyanidverbindung eine oder mehrere Arten aus der Gruppe von Acrylnitril, Methacrylnitril, Ethacrylnitril und einem Derivat davon ist.

8. Verfahren zur Herstellung eines thermoplastischen transparenten Acrylnitril-Butadien-Styrol-Harzes für Extrusionsflächenkörper nach Anspruch 1, wobei die Propfpolymerisation erfolgt, indem ferner 0,2 bis 0,6 Gew.-Teile eines Emulgators, 0,2 bis 0,6 Gew.-Teile eines Mittels zur Steuerung des Molekulargewichts und 0,05 bis 0,3 Gew.-Teile eines Polymerisationsinitiators zugesetzt werden und zwar 100 Gew.-Teile des Monomergemisch bezogen.

9. Verfahren zur Herstellung eines thermoplastischen transparenten Acrylnitril-Butadien-Styrol-Harzes für Extrusionsflächenkörper nach Anspruch 1, wobei Propfeopolymerisation unter b) 4 bis 7 Stunden bei 65 bis 80°C erfolgt.

**Revendications**

1. Procédé de préparation d'une résine transparente thermoplastique acrylonitrile-butadiène-styrène pour l'extrusion de feuilles, comprenant les étapes consistant à :

   a) fournir un latex de caoutchouc diène conjugué ayant un indice de gonflement de 8 à 60

b) copolymériser avec greffage

i) de 5 % à 35 % en poids du latex de caoutchouc diène conjugué de a),
ii) de 30 % à 70 % en poids de méthacrylate alkylester ou d'acrylate alkylester ;
iii) de 15 % à 30 % en poids d'un composé vinylique aromatique ; et
iv) de 0,5 % à 20 % d'un composé cyanure de vinyle

par polymérisation en émulsion où le poids moléculaire moyen en poids du copolymère greffé obtenu par copolymérisation avec greffage est égal à 80 000 à 200 000.

2. Procédé de préparation d'une résine transparente thermoplastique acrylonitrile-butadiène-styrène pour l'extrusion de feuilles selon la revendication 1, dans lequel une différence entre l'indice de réfraction du latex de caoutchouc diène conjugué i) de b) et celui d'un mélange du composé méthacrylate alkylester ou acrylate alkylester ii) de b), le composé vinylique aromatique iii) de b), et le composé cyanure de vinyle iv) de b) est de 0,005.

3. Procédé de préparation d'une résine transparente thermoplastique acrylonitrile-butadiène-styrène pour l'extrusion de feuilles selon la revendication 1, dans lequel le latex de caoutchouc diène conjugué a un diamètre de particule moyen de 2000 Å à 5000 Å et une teneur en gel de 50 % à 98 %.

4. Procédé de préparation d'une résine transparente thermoplastique acrylonitrile-butadiène-styrène selon la revendication 1, dans lequel le latex de caoutchouc diène conjugué est choisi parmi le groupe consistant en polybutadiène, copolymère butadiène-styrène (SBR), copolymère butadiène-acrylonitrile (NBR), copolymère éthylène-propylène, (EPDM), et un latex de caoutchouc similaire à ceux-ci.

5. Procédé de préparation d'une résine transparente thermoplastique acrylonitrile-butadiène-styrène selon la revendication 1, dans lequel le composé méthacrylate alkylester ou acrylate alkylester est d'un type ou plus choisi parmi le groupe consistant en méthyl méthacrylate, éthyl méthacrylate, méthylacrylate, et un dérivé de ceux-ci.

6. Procédé de préparation d'une résine transparente thermoplastique acrylonitrile-butadiène-styrène selon la revendication 1, dans lequel le composé vinylique aromatique est d'un type ou plus choisi parmi le groupe consistant en styrène, α-méthyl styrène, o-éthyl styrène, p-éthyl styrène, vinyl toluène, et un dérivé de ceux-ci.

7. Procédé de préparation d'une résine transparente thermoplastique acrylonitrile-butadiène-styrène selon la revendication 1, dans lequel le composé cyanure de vinyle est d'un type ou plus choisi parmi le groupe consistant en acrylonitrile, méthacrylonitrile, éthacrylonitrile, et un dérivé de ceux-ci.

8. Procédé de préparation d'une résine transparente thermoplastique acrylonitrile-butadiène-styrène selon la revendication 1, dans lequel la polymérisation avec greffage est réalisée en ajoutant en outre 0,2 à 0,6 parties en poids d'un émulsifiant, 0,2 à 0,6 parties en poids d'un agent de régulation du poids moléculaire, et 0,05 à 0,3 parties en poids d'un initiateur de polymérisation, par rapport à 100 parties en poids du mélange de monomères.

9. Procédé de préparation d'une résine transparente thermoplastique acrylonitrile-butadiène-styrène selon la revendication 1, dans lequel la copolymérisation avec greffage de b) est réalisée à 65°C à 80°C pendant 4 à 7 heures.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4767833 A
- JP HEI11147920 B
- EP 703252 A
- JP 8199007 A